# EUROPEAN PATENT APPLICATION

(11) **EP 3 686 042 A1**
(43) Date of publication of application: **29.07.2020**
(21) Application number: 19153371.0
(22) Date of filing: 23.01.2019
(51) Int. Cl.: B60K 35/00, G06F 3/01, G06F 3/14

(54) **SYSTEM AND METHOD FOR PROVIDING A NOTIFICATION TO AN OCCUPANT OF A VEHICLE**

(71) Applicant: Visteon Global Technologies, Inc., Van Buren Township, MI 48111-5711 (US)
(72) Inventor: MUELLER-TOMFELDE, Christian, 79825 Korntal (DE); TORSCHMIED, Axel, 75334 Straubenhardt (DE)
(74) Representative: MERH-IP Matias Erny Reichl Hoffmann Patentanwälte PartG mbB

(57) **Abstract**

A method and a system for enhancing a user experience of an occupant in a vehicle that includes a step of detecting a change of the occupant's line of gaze and a step of outputting a notification, if a change of the occupant's line of gaze is detected or if a predetermined time period has elapsed. The notification is provided on an output device based on the detected occupant's line of gaze.

## Description

### TECHNICAL FIELD

One or more embodiments described herein relate to a system and a method for providing a notification to an occupant of a vehicle. One or more embodiments described herein relate to a system and a method for providing a notification to an occupant of a vehicle, which is equipped with a plurality of output devices.

### BACKGROUND

With an increasing number of electronic systems and components, such as sensors and control devices, provided in a vehicle, an occupant, such as a driver or a passenger, in the vehicle is often faced with an increasing amount of information and notifications output by, for example, a navigation system, an infotainment system, an ADAS-system (Advanced Driver Assisting System), or an instrument cluster.

Among the various kinds of notifications to be output, there may be significant difference in importance and urgency, and thus priority and perception by the occupant of the vehicle. For example, a notification issued by a navigation system relating to a change in an estimated arrival time calculated by the navigation system may not be required to be brought to the occupant's attention immediately, while a notification relating to a breakdown of the lane keeping assistant, for example, may need to be brought to the occupant's attention immediately, as perception of this, the notification may be highly safety relevant.

### BRIEF SUMMARY OF THE INVENTION

One or more embodiments relate to a method for providing a notification to an occupant of a vehicle.

Specifically, one or more embodiments described herein relate to a system and a method for providing a notification, through an output device, to an occupant of a vehicle, which may depend on a gaze of the occupant.

In a first step, a notification that has to be provided to an occupant of the vehicle may be determined. Non-limiting examples for notifications are notifications from sensors, like pressure sensors for wheels, notifications from fill level indicators for oil and fuel levels, notifications on speed and acceleration, notifications of systems , like a lane keeping assist system suddenly going offline or operating at a limited capacity, traffic congestion notifications, notifications concerning the internet connection of an entertainment system, a notification of a mobile phone caused by a phone call, a notification of a tablet computer caused by a messenger application, notifications on non-traffic related notifications, like personal mobile phone communication, SMS messenger, etc. Notifications may be visual notifications to be displayed and/or audible notifications to be output with an audio system. There may also be notifications without a predefined output method. Notifications may be available in the form of information data.

According to an aspect, an occupant's line of gaze at a time t1 and at a time t2 may be detected, wherein the detection at the time t2 is after the time t1. The term "line of gaze" is understood as the line between a person's pupil and a spot to which the view of the person is directed to.

The detected lines of gaze at the times t1 and t2 may be examined, as to whether the line of gaze at the time t1 differs from the line of gaze at the time t2, and the notification may be output based on the result of the examination of the lines of gaze at the time t1 and the time t2.

In one or more embodiments, the notification may be output, when the examining determines that the occupant's line of gaze at the time t1 differs from the occupant's line of gaze at the time t2. For example, an occupant of a vehicle travelling in an automated driving mode may change his/her line of gaze from a tablet computer positioned on his/her lap to a main display mounted in the cockpit of the vehicle. In the automotive vehicle example, the occupant may concentrate completely on non-driving related aspects, like having a phone call via a mobile phone, playing a game on a tablet computer, etc., while the vehicle is travelling. This change of the occupant's line of gaze triggers an output of the notification on, for example, the main display. This example illustrates a benefit that the system is capable to detect a change of the occupant's attentiveness and may provide the notification just in such a moment, when it is detected that the occupant's attentiveness changes. This may give the occupant the sensation that the notification is provided to him/her serendipitously at the moment when the occupant's attentiveness changes.

According to a further aspect, a method for providing a notification to an occupant of a vehicle may comprise in a case, wherein the examining determines that the occupant's line of gaze at the time t1 is equal to the occupant's line of gaze at the time t2, the steps of determining if a predetermined time period T between the time t1 and the time t2 has elapsed and, if the time period T has elapsed, outputting the notification. As an example, the vehicle may be travelling in an automatic driving mode, which may be referred to as an autonomous driving mode, along a route to a destination. The vehicle may encounter a traffic congestion along the route, which necessitates that the vehicle stops. In response, the navigation system may determine that the estimated time of arrival related to the destination is one hour later due to the traffic congestion. This determination may be considered as a notification. However, since the notification is available, the occupant's line of gaze has been continuously focused on the same spot. In this state, no change of the occupant's line of gaze is detected for a certain time period. Because of that, the notification on the change in estimated arrival time may not be provided to the occupant. However, after a time period, for example 10 minutes, whereat the occupant's line of gaze has continued to remain constant, the notification may be output acoustically, for example, via a headset and/or a loudspeaker of a sound system of the vehicle. The occupant notices the notification and may inform a remote person, such as by a phone-call, an email message, or a text message, of the new anticipated arrival time.

According to another aspect, one or more embodiments relate to a further method for providing a notification to an occupant of a vehicle. In a step, a notification that has to be provided to an occupant, may be determined. Further, an occupant's line of gaze at a time t may be detected. The notification may be output on at least one output device of a plurality of output devices based on a relationship between the occupant's line of gaze and the output devices at the time t. Non-limiting examples for a relationship between the output device and the occupant's line of gaze are Euclidian and Chebyshev distances between the line of gaze and the output device. Another example for a relationship between the line of gaze and the output device is a predetermined assignment of a line of gaze to one or more specific output devices. An illustrating example may be contemplated where the occupant of a vehicle is travelling in an automated driving mode and is looking backwards talking to a person, who sits in the back of the vehicle. Thus, the system detects that the occupant's line of gaze is directed toward the back of the vehicle. In this example, no display is in the occupant's view as the occupant looks toward the back of the vehicle. In such a scenario, the sound system of the vehicle may be assigned to a plurality of lines of gaze, which are directed toward the back of the vehicle, and thus the notification may be output by a loudspeaker of the sound system of the vehicle. In case of only a visual notification, the sound system may output a sound to attract the occupant's attention, in particular, if no display is in the occupant's view.

In one or more embodiments, a nearest display of the plurality of output devices with respect to the occupant's line of gaze at the time t may be determined and the notification may be output at least via the nearest display. Thus, the occupant's line of gaze may require minimal adjustments to read the notification. This enhances the user experience of the occupant, for this minimizes the time and adjustment needed for the occupant to appreciate the notification. That minimization may be further beneficial in regards to safety. The minimization may allow very urgent notifications, like a driving assistant systems issue, to be appreciated quicker by the occupant.

According to an aspect, the notification may be output with at least one output device of the plurality of output devices, which is assigned to an area predefined by a plurality of lines of gaze including the occupant's line of gaze at the time t. This allows to provide the notification appropriately even under particular circumstances. For example, if it is detected that the occupant's eyes are closed, it is advantageous to provide the notification acoustically to bring the notification reliably to the occupant's attention.

According to an aspect, the notification may be output on at least one further predetermined output device of the plurality of output devices. For example, an urgent and important notification may be simultaneously provided on a display and via a sound system of the vehicle to emphasize the urgency and importance of the notification.

According to an aspect, a priority may be attributed to the notification and the notification may be output based on the attributed priority. Prioritization may be done based on urgency and/or importance and may be assigned automatically by a system, such as a vehicle assistance system. For example, safety relevant notifications, like a distance measurement system being in failure mode, may have a high priority due to urgency and importance, whereas a notification that the wheel pressure of a single wheel is differing marginally from a nominal value may have a lower priority.

In one or more embodiments, a point in time may be allocated to the notification based on the attributed priority. The notification may be output based on the allocated point in time. For example, urgent and important notifications may need to be output immediately, whereas less urgent notifications may be deferred to a later point in time. This strikes a balance between the occupant's comfort of riding in a vehicle in an automated driving mode - not being disturbed - and the necessity to provide a notification to the occupant within a predetermined time period.

In one or more embodiments, at least one output device of the plurality of output devices may be selected based on the attributed priority, and the notification may be output based on the selected output device. For example, to emphasize the importance of a notification, the notification may not only be displayed, but also output acoustically.

According to another aspect, there may be provided a system for providing a notification to an occupant of a vehicle comprising a detection unit which is configured to detect an occupant's line of gaze at a time t1 and at a time t2, wherein the detection at the time t2 is after the time t1. Further, the system comprises an examination unit for examining, whether the occupant's line of gaze at the time t1 differs from the occupant's line of gaze at the time t2, a determination unit for determining the notification that has to be provided to the occupant and an output unit for outputting the notification based on the output of the examination unit. Examples for output devices of the output unit are displays, like a cockpit display, a head-up display, a mobile phone, a tablet computer, and a sound system including a headset, sound systems of the vehicle, a headphone or earphones and loudspeakers.

According to one or more embodiments, an output device of the output unit may be configured to output the notification when the examination unit detects a difference in the occupant's lines of gaze at the times t1 and t2. The difference in the lines of gaze at the times t1 and t2 may indicate a change of the occupant's attentiveness. For example, while the occupant is working on a tablet computer, the occupant looks up. Thus, the examination unit examines a change of the occupant's line of gaze and in this moment the notification, that, for example, fuel is left only for 50km is output by the output unit. That is, since the occupant is as less as possible distracted from work, the comfort of riding a vehicle in an automated driving mode is increased.

According to an aspect, the examination unit may be configured to examine that the occupant's line of gaze at the time t1 is equal to the occupant's line of gaze at the time t2. The system may comprise a timer for determining whether a predetermined time period T between the time t1 and the time t2 has elapsed and the output unit may be configured to output the notification when the predetermined time period T has elapsed. As a result, the system provides the notification at least within a predetermined time period T.

According to another aspect, there may be provided a system for providing a notification to an occupant of a vehicle. The system may comprise a determination unit for determining a notification that has to be provided to the occupant. The system may further include a detection unit for detecting an occupant's line of gaze at a time t. Further, there may be provided an output unit comprising a plurality of output devices, wherein at least one of the output devices may be configured to output the notification based on a relationship between the occupant's line of gaze and the at least one of the output devices at the time t.

According to an aspect, the output unit may be configured to display the notification on one display of the plurality of displays, wherein the one display is the nearest display of the plurality of displays with respect to the occupant's line of gaze at the time t.

According to an aspect, the output unit may be configured to output the notification with at least one output device of the plurality of output devices, which is assigned to an area predefined by a plurality of lines of gaze including the occupant's line of gaze at the time t.

According to an aspect, the output unit may be configured to output the notification on at least one further predefined output device of the plurality of output devices.

According to an aspect, the determination unit may be configured to attribute a priority to the notification and the output unit may be configured to output the notification based on the attributed priority.

According to an aspect, the determination unit may be configured to allocate a point in time to the notification based on the attributed priority and the output unit may be configured to output the notification based on the allocated point in time.

According to an aspect, the determination unit may be configured to select an output device of the plurality of output devices to output the notification based on the attributed priority and the output unit may be configured to output the notification based on the selected output device.

Further details, features and advantages of implementations of the invention result from the following description of exemplary embodiments by reference to the associated figures.

### BRIEF DESCRIPTION OF THE DRAWINGS

Figure 1 schematically illustrates a notification management system for a vehicle according to an embodiment.
Figure 2 illustrates an example for an output unit.
Figure 3 illustrates an example for an occupant's line of gaze detection.
Figure 4 shows a process flow schematically illustrating a method according to an embodiment.
Figure 5 shows a process flow schematically illustrating a method according to an embodiment.
Figure 6 schematically illustrates a notification management system for a vehicle according to an embodiment.
Figure 7 shows a process flow schematically illustrating a method according to an embodiment.
Figure 8 shows a process flow schematically illustrating a method according to an embodiment.
Figures 9a - 9c illustrate an example for providing a notification with usage of the notification management system.
Figures 10a - 10c illustrate another example for providing a notification with usage of the notification management system.
Figures 11a - 11b illustrate another example for providing a notification with usage of the notification management system.

### DETAILED DESCRIPTION OF THE INVENTION

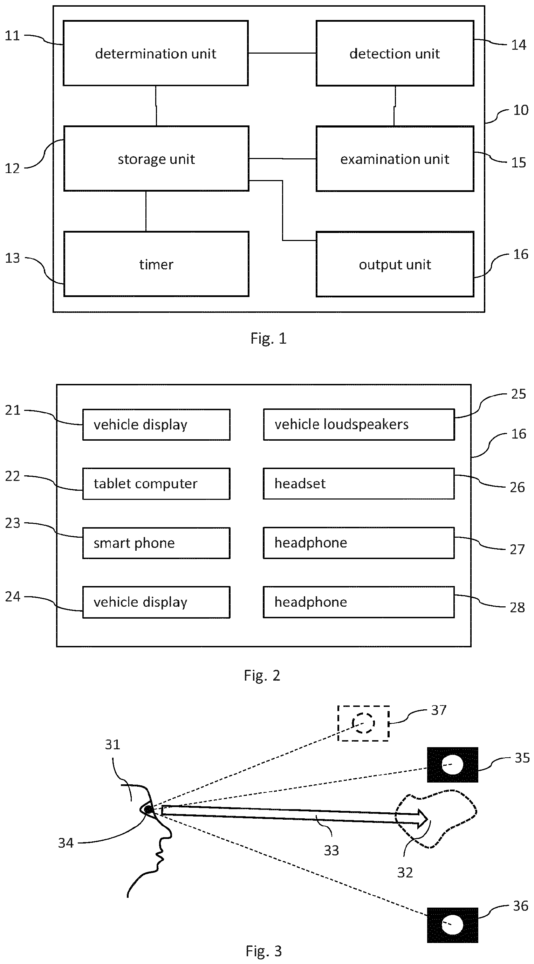

Figure 1 shows a schematic illustration of a notification management system of a vehicle according to an embodiment. The notification management system 10 may comprise a determination unit 11, a storage unit 12, a timer 13, a detection unit 14, an examination unit 15 and an output unit 16. The notification management system 10 may be implemented in a vehicle, including cars, trucks, airplanes, drones, ships, boats, for example, and may be implemented as part of an advanced occupant-assistance system (ADAS) comprising a navigation system, a lane keeping system, an automatic cruise control, etc. In some embodiments, the different units of the notification management system 10 may be implemented as software modules running on one or more electronic control units. Further, some units may be grouped to one or more units or provided separately.

The determination unit 11 may provide a notification, which is to be output to the occupant. The notification may be provided by any other system or component of the vehicle or another vehicle in communication with the vehicle or may be determined by comparing sensor data with nominal values, which may be stored in the notification management system 10. In some embodiments the determination unit 11 may also allocate to each notification a priority, which may represent the importance and urgency of the notification.

The notification may be stored in the storage unit 12, which may be realized as a queue, a stack, a list, a list of notifications ordered with respect to priority, etc., or any combination of the previous realizations. The storage unit may be a volatile or a nonvolatile memory. The notification to be output may be stored in the storage unit 12.

Output of notifications may be deferred in the storage unit 12 until the examination unit 15 determines a change of the occupant's line of gaze or a predetermined time period T measured by a timer 13 elapses. The occupant's line of gaze 33 may be detected with the detection unit 14. The timer 13 may be activated at the moment when the notification is deferred in the storage unit 12. The timer 13 may be configured with a predefined time period T for all notifications or a predetermined time period T depending on the priority of the notification.

The examination unit 15 may determine, based on the detection of the occupant's line of gaze by the detection unit 14, that the occupant's line of gaze 33 is directed to a vehicle display. This may cause the notification to be output immediately by the output unit 16, for example.

Figure 2 shows a schematic illustration of the output unit 16 in a vehicle according to an embodiment. The output unit 16 may comprise visual output devices, like vehicle displays 21 and 24, a tablet computer 22, a smart phone 23, and acoustical output devices, like vehicle loudspeakers 25, a headset 26, a first headphone 27, and a second headphone 28. The output device to output a notification may be selected based on a change of the occupant's line of gaze and/or on the output device's position in the vehicle with respect to the occupant. The notification may be output with respect to an allocated priority.

Figure 3 shows an example of an occupant's line of gaze detection by a detection unit 14. A detection unit 14 may detect the occupant's line of gaze 33, which may be defined as the line between the occupant's pupil 34 and a spot 32, at which the occupant's view is directed to. The detection unit 14 may comprise an evaluation unit in conjunction with a plurality of cameras 35, 36 and 37 - not limited in their number - positioned at several positions and detecting the direction of the occupant's pupil 34. The cameras may be infrared cameras, video cameras, etc. The cameras may be mounted and hidden, without obstructing the view of the cameras, in any cladding of a steering wheel, below the ceiling, any control units in the cockpit or in the back of a vehicle. The line of gaze 33 may be finally detected with images from the cameras 35, 36, 37, by signal processing and image analysis. Some steps may be executed with a computer unit comprising input and output interfaces, at least one CPU and at least one memory.

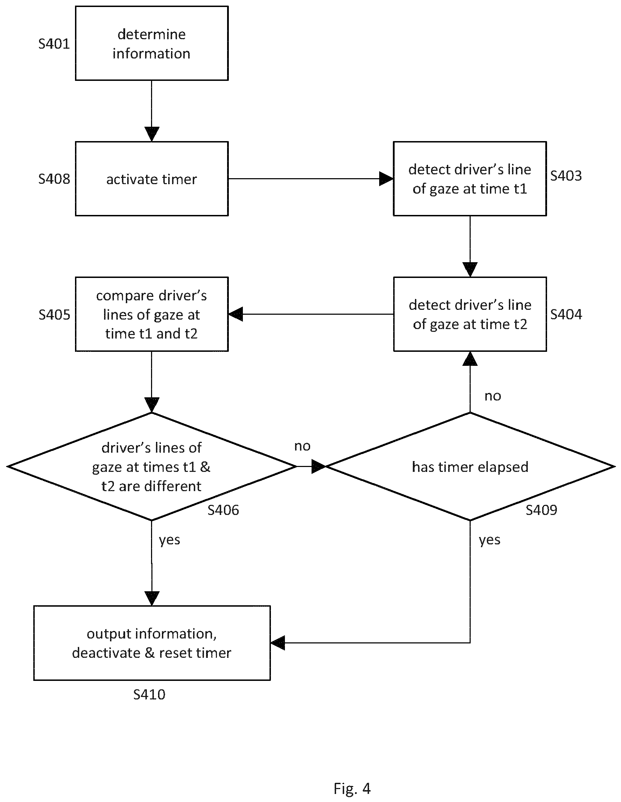

Figure 4 shows a process flow which schematically illustrates a method for operating a notification management system. The method may be carried out by a notification management system as described above with reference to Figure 1. Further, it may be possible to change the order of single steps, to summarize single steps and/or to add new steps without changing the functionality of the described process. It may be also possible to execute some steps in parallel.

In a first process step S401, a notification may be determined, which has to be provided to the occupant. This may be done, for example, by comparing sensor data with reference values or by providing a notification of another system of the vehicle as well as another vehicle or a mobile phone.

In a second process step S408, a timer 13 is activated. In the following steps S403 and S404, the occupant's line of gaze 33 may be detected at a time t1 and at a time t2, respectively, wherein the time t2 is after t1.

Based on the detections at the times t1 and t2 in the steps S403 and S404, the lines of gaze 33 at the times t1 and t2 may be compared with each other in step S405 and a change of the occupant's line of gaze may be determined. Additionally, a threshold may be introduced, which must be exceeded by the change of the occupant's line of gaze as to be determined as a change of the occupant's line of gaze. This may, for example, ensure that switching the page while reading is detected as maintaining the attentiveness unchanged, whereas looking up from a newspaper is detected as a change of attentiveness. Further, other contextual cues in regards to the occupant, such as whether the occupant is awake, may be considered. The threshold may be optimized with artificial intelligence or any other optimization algorithms with respect to the lines of gaze to improve the determination of natural interruptions of the occupant in his/her work.

In the step S406, a case decision may be done with respect to the result of the examination of the occupant's lines of gaze in the previous step S405. If there is a change of the occupant's line of gaze determined, the notification may be output and the timer 13 may be deactivated and reset in step S410. However, if no change of the occupant's line of gaze is determined, it may be checked if the timer 13, which has been activated in step S408, has elapsed. In the case the timer 13 has elapsed, the notification determined in step S401 may be output and the timer 13 may be deactivated and reset according to step S410. If the timer 13 has not elapsed, the process flow returns to step S404 and a new detection of the occupant's line of gaze 33 at a time t2 is done. That is, a notification may be output, if a timer 13 elapses, and/ or, if a change of the occupant's line of gaze is determined.

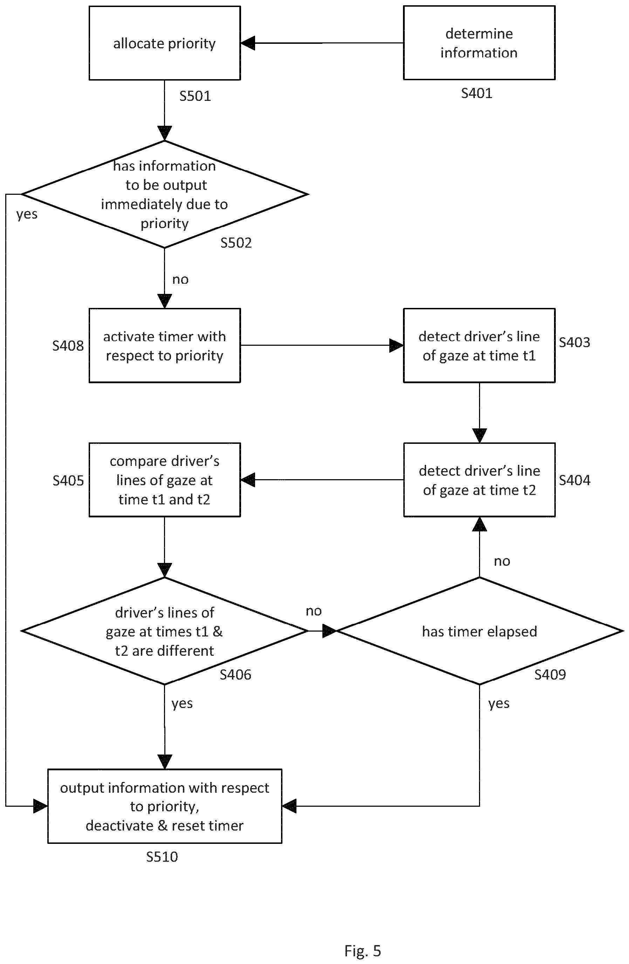

Figure 5 shows a process flow which schematically illustrates a method for operating a notification management system as shown in Figure 4, with the additional steps of prioritizing a notification and using the prioritization to manage the output of the notification. The method may be executed by a notification management system as shown in Figure 1.

In step S501, attributing a priority to the notification and, in step S502, executing a case decision with respect to the allocated priority of step S501 is executed after the step S401 of determining a notification. If the attributed priority of the notification is high, the notification is output based on the priority of the notification, the timer is deactivated and reset in step S510. In other cases, the process continues with the step S408. Further, the step S410 of outputting the notification after the case decisions in steps S406 and S409 is replaced by a step S510 of outputting the notification with respect to the attributed priority and deactivating and reset of the timer.

In some embodiments an occupant may predefine and adapt the process of attributing priority to the needs of the occupant, for example, such that some, like non-important and non-urgent notifications are not output. However, the occupant may be restricted from setting the priorities, in particular, of important and urgent notifications to values, whereat no notification is output. As such, the occupant may be restricted from turning notifications completely off.

In some embodiments an occupant may be able to set a threshold controlling the output of notifications with a certain priority. However, the occupant may be restricted from setting the threshold so high that no information is output. As such, the occupant may be restricted from turning notifications completely off. For example, a notification, that the estimated time of arrival will be later, gets a priority with a value of 2 attributed, whilst the threshold for outputting a notification has been set by the occupant to 3. Thus, only notifications with a value of 3 or higher are output and the notification, that the estimated time of arrival will be later, is not output.

In one or more embodiments, in a case, when more than one notification has to be output, the order of outputting the notifications may be advantageously amended from a First-In-First-Out order (the first determined notification is output at first) to the attributed priority of the notifications, that means the notification with the highest priority is output at first, then the notification with the second highest priority and so on.

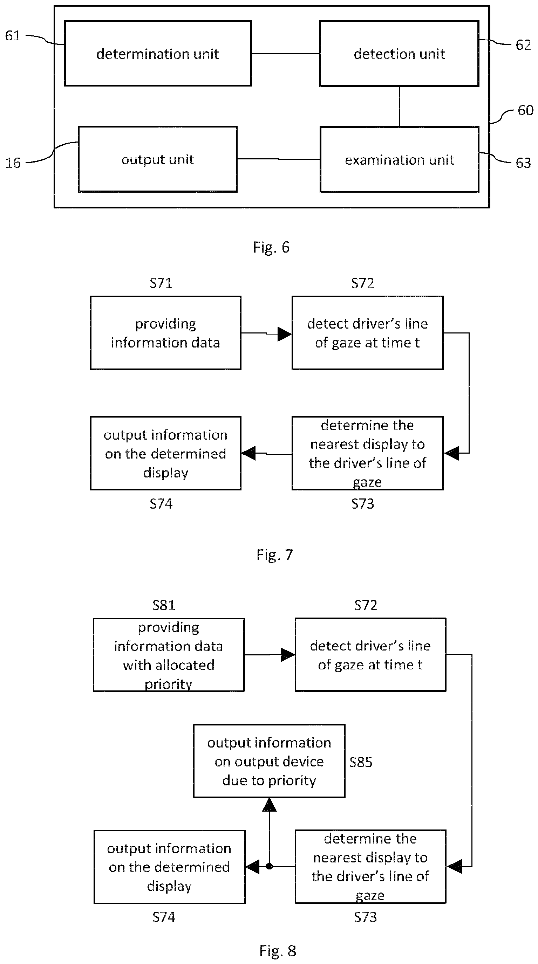

Figure 6 shows a schematic illustration of a notification management system of a vehicle according to an embodiment. The notification management system 60 may comprise a determination unit 61, a detection unit 62, an examination unit 63 and an output unit 64. The notification management system 60 may be implemented in a vehicle, including cars, trucks, airplanes, drones, ships, boats, for example, and may be implemented as part of an advanced occupant-assistance system (ADAS) comprising a navigation system, a lane keeping system, an automatic cruise control, etc. In some embodiments, the different units of the notification management system 60 may be implemented as software modules running on one or more electronic control units. Further, some units may be grouped to one or more units and/or may be provided separately.

The determination unit 61 may provide a notification, which is to be output to the occupant. The notification may be provided by any other system, like a mobile phone, or by any system or component of the own vehicle or another vehicle or may be determined by comparing sensor data with nominal values. In some embodiments the notification unit 61 may also allocate to each notification a priority, which may represent the importance and urgency of the notification.

The detection unit 62 may detect an occupant's line of gaze 33, which may be used by the examination unit 63 to determine an output device of the output unit 16, with which the output may be output. The examination unit 63 may determine at least one output device of the output unit 16 depending on the occupant's line of gaze 33 and the assignment of the output devices of the output unit 16 to pluralities of lines of gaze.

The output unit 16 may finally output the notification of the determination unit 61 on the output device determined by the examination unit 63.

Figure 7 shows an embodiment of a process flow which schematically illustrates a method for providing a notification to an occupant of a vehicle. The method may be carried out by a notification management system as described above with reference to Figure 6. Further, it may be possible to change the order of single steps, to summarize single steps and/or to add new steps without changing the functionality of the described process. It may be also possible to execute some steps parallel. In a first step S71 a notification is provided as it is already described in the step S401. In a second step S72, an occupant's line of gaze is detected. In a further step S73, the nearest display with respect to the occupant's line of gaze is determined using a Chebyshev distance. In further embodiments different assignments of the occupant's line of gaze to output devices, like predefined assignments or other methods of distance calculation, may be applied.

Figure 8 shows process flow of an embodiment of a method for providing a notification to the occupant of a vehicle. The steps of the method of this embodiment corresponds to the process flow of Figure 7, wherein the step S71 is replaced by the step S81 of providing a notification with allocated priority. Additionally, the notification may be output in a further step S85 based on its allocated priority. This step S85 may be executed in parallel with the step of outputting a notification on the determined display S64. The method shown in the process flow in Figure 8 may be executed by a system as described above with reference to Figure 6.

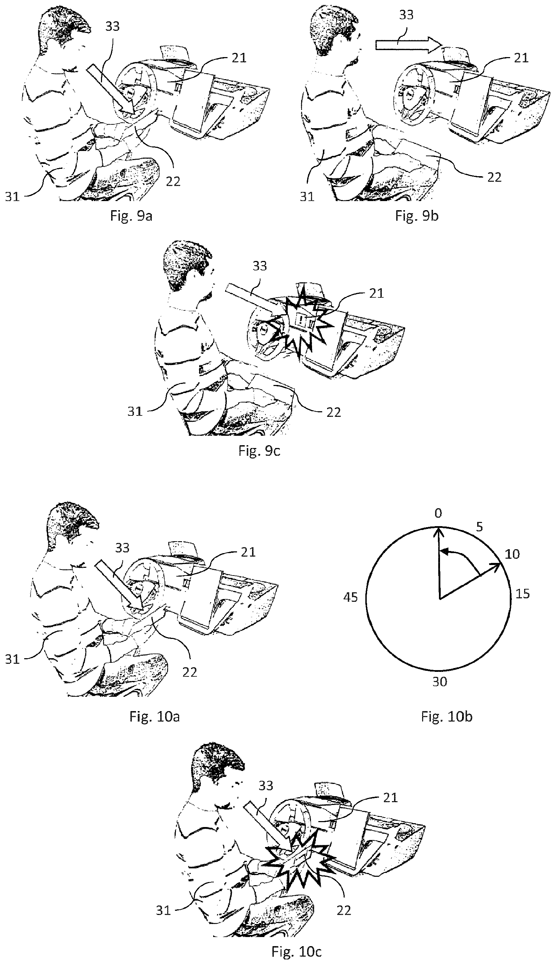

Figures 9a-9c illustrate an embodiment in practice, where the methods 4 and 7 are applied. In Figure 9a, an occupant 31 is sitting in his vehicle with several displays 21, 22 and a steering wheel and reading on his tablet computer 22 positioned on his lap. Thus, the occupant's line of gaze 33 is detected on the tablet computer 22. At a certain moment the occupant 31 looks up, as shown in Figure 9b. This change of the occupant's line of gaze is detected by the detection unit 14 and determined as a change of the occupant's line of gaze by the examination unit 15 and, thus, in this moment a notification, which has been determined by the determination unit 11, is output to the occupant with the output unit 16.

The determination unit 61 determines the notification to be output. Based on the result of the detection unit 62, the examination unit 63 determines the vehicle display 21 as the nearest display with respect to the occupant's line of gaze 33. As a result, the output unit 16 outputs the notification on the vehicle display 21 and the notification appears serendipitously on the vehicle display 21, as shown in Figure 9c.

Figures 10a-10c illustrate another embodiment in practice, where the methods 4 and 7 applied. In Figure 10a an occupant 31 is sitting in his vehicle with his gaze 33 on a tablet computer 22 positioned on his lap. At a certain time, a notification is provided to the determination unit 11 of the notification management system, in order to be provided to the occupant. Thus, a timer 13 is started with an exemplary time period T of 10 minutes as shown in Figure 10b. After the timer 13 has elapsed, the notification is provided to the occupant 31 with the output unit 16.

The determination unit 61 determines the notification to be output to the occupant and the detection unit 62 detects the occupant's line of gaze 33. Based on the notification about the occupant's line of gaze, the examination unit determines that the occupant's line of gaze is directed on the tablet computer 22 and thus the output unit 16 outputs the notification on the tablet computer 22 on the occupant's lap.

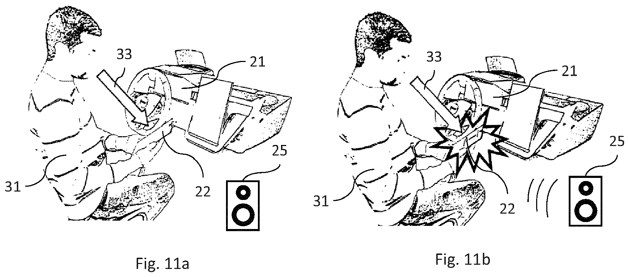

Figures 11a and 11b illustrate an embodiment in practice, where the methods 5 and 8 are applied. In Figure 11a, an occupant 31 is working on his tablet computer 22, when a notification of the ADAS with a high priority is provided to the notification management system to be output to the occupant. Due to its high priority, the notification is output immediately to the occupant 31. The detection unit 62 detects the occupant's line of gaze 33 and provides the notification about the occupant's line of gaze to the examination unit 63, which determines that the occupant's line of gaze is directed to the tablet computer 22, which is at the same time the nearest output device with respect to the occupant's line of gaze 33. Thus, the output unit 16 outputs the notification of the ADAS on the tablet computer 22 and, additionally, with the vehicle loudspeakers 25 due to the high priority of the notification of the ADAS.

### REFERENCE NUMERALS

T time period for a timer to output a notification
t point in time at which the occupant's line of gaze is detected
t1 point in time at which the occupant's line of gaze is detected
t2 point in time after t1 at which the occupant's line of gaze is detected
10 system for providing a notification to the occupant of a vehicle
11 determination unit determining a notification to be output
12 storage unit storing a notification till the notification is output
13 timer determining if a time period T has elapsed
14 detection unit detecting the occupant's line of gaze
15 examination unit determining a change of the occupant's line of gaze
16 output unit for outputting a notification
21 vehicle display
22 tablet computer
23 smart phone
24 vehicle display
25 vehicle loudspeakers
26 headset
27 headphone
28 headphone
31 occupant, such as a driver or a passenger
32 spot of the occupant's line of gaze
33 occupant's line of gaze
34 pupil of the occupant
35-37 cameras of a detection unit detecting the occupant's line of gaze 33
61 determination unit determining a notification to be output
62 detection unit detecting the occupant's line of gaze 33
63 examination unit determining the output device of the output unit based on the detected occupant's line of gaze

## Claims

1. A method for providing a notification to an occupant (31) of a vehicle, comprising the steps of:
- determining a notification that has to be provided to an occupant (31) of a vehicle;
- detecting the occupant's line of gaze (33) at a time t1;
- detecting the occupant's line of gaze (33) at a time t2, wherein the detection at the time t2 is after the time t1;
- examining, whether the occupant's line of gaze (33) at the time t1 differs from the occupant's line of gaze (33) at the time t2 and
- outputting the notification based on the result of the examination of the line of gaze (33) at the time t1 and the time t2.

2. A method according to claim 1, wherein,
when the examining determines that the occupant's line of gaze (33) at the time t1 differs from the occupant's line of gaze (33) at the time t2, the notification is output.

3. A method according to claim 1, wherein
the examining determines that the occupant's line of gaze (33) at the time t1 is equal to the occupant's line of gaze (33) at the time t2;
- determining if a predetermined time period T between the time t1 and the time t2 has elapsed and, if the time period T has elapsed, outputting the notification.

4. A method for providing a notification to an occupant (31) of a vehicle, comprising the steps of:
- determining a notification that has to be provided to the occupant (31);
- detecting an occupant's line of gaze (33) at a time t;
- outputting the notification on at least one output device of a plurality of output devices (21-28) based on a relationship between the occupant's line of gaze (33) and the output devices (21-28) at the time t.

5. A method according to claim 4
- determining a nearest display of the plurality of output devices (21-28) with respect to the occupant's line of gaze (33) at the time t and outputting the notification at least via the nearest display.

6. A method according to claim 4 or 5
- outputting the notification with at least one output device of the plurality of output devices (21-28), which is assigned to an area predefined by a plurality of lines of gaze including the occupant's line of gaze (33) at the time t.

7. A method according to claim 5 or 6
- outputting the notification on at least one further predetermined output device of the plurality of output devices (21-28).

8. A method according to one of claims 1 to 7
- attributing a priority to the notification; and
- outputting of the notification based on the attributed priority.

9. A method according to claim 8
- allocating a point in time to the notification based on the attributed priority; and
- outputting the notification based on the allocated point in time.

10. A method according to claim 8 or 9
- selecting at least one output device of the plurality of output devices (21-28) based on the attributed priority, and
- outputting the notification based on the selected output device.

11. A system (10) for providing a notification to an occupant (31) of a vehicle, comprising:
- an examination unit (15) for examining, whether the occupant's line of gaze (33) at the time t1 differs from the occupant's line of gaze (33) at the time t2;
- a determination unit (11) for determining a notification that has to be provided to the occupant (31); and
- an output unit (16) for outputting the notification based on the result obtained by the examination unit (15).

12. A system (10) according to claim 11, wherein
an output device of the output unit is configured to output the notification when the examination unit (15) detects a difference in the occupant's lines of gaze (33) at the times t1 and t2.

13. A system (10) according to claim 11, wherein
the examination unit (15) is configured to examine that the occupant's line of gaze (33) at the time t1 is equal to the occupant's line of gaze (33) at the time t2;
and the system further comprises
a timer for determining whether a predetermined time period T between the time t1 and the time t2 has elapsed, the output unit (16) is configured to output the notification when the time period T has elapsed.

14. A system (60) for providing a notification to an occupant (31) of a vehicle, comprising:
- a determination unit (61) for determining a notification that has to be provided to the occupant (31);
- a detection unit for detecting an occupant's line of gaze (33) at a time t;
- an output unit (16) comprising a plurality of output devices (21-28), wherein at least one of the output devices (21-28) is configured to output the notification based on a relationship between the occupant's line of gaze (33) and the at least one of the output devices (21-28) at the time t.

15. A system (60) according to claim 14, wherein
the output unit (16) is configured to display the notification on one display of the plurality of displays (21-24), wherein the one display is the nearest display of the plurality of displays (21-24) with respect to the occupant's line of gaze (33) at the time t.
